# FASCICULE DE BREVET EUROPEEN

(11) **EP 3 039 757 B1**
(45) Date de publication et mention de la délivrance du brevet: **10.05.2017**
(21) Numéro de dépôt: 14756091.6
(22) Date de dépôt: 18.07.2014
(51) Int. Cl.: H02B 13/045, H01H 33/57, H02B 13/065, H02B 13/025

(54) **DISPOSITIF DE CONFINEMENT DES FUITES DE GAZ SE PRODUISANT AU NIVEAU D'UN DISQUE DE RUPTURE D'UN COMPARTIMENT D'UN POSTE ELECTRIQUE OU D'UN DISJONCTEUR A HAUTE TENSION A ISOLATION GAZEUSE**
ANORDNUNG ZUR ABKAPSELUNG VON GASLECKAGEN IM BEREICH DER DRUCKENTLASTUNGSSCHEIBE EINES GASRAUMS EINER GASISOLIERTEN HOCHSPANNUNGSSCHALTANLAGE ODER EINES HOCHSPANNUNGS GASISOLIERTEN LEISTUNGSSCHALTER.
DEVICE FOR THE CONTAINMENT OF LEAKED GAS OCCURING AROUND THE PRESSURE RELEASE DISC OF A HIGH VOLTAGE GIS OR GAS INSULATED CIRCUIT BREAKER.

(30) Priorité: 26.08.2013 FR 1358191; 05.05.2014 FR 1454051
(43) Date de publication de la demande: 06.07.2016
(73) Titulaire: Ircamex, 44300 Nantes (FR)
(72) Inventeur: CHARON, Romain, 44300 Nantes (FR)
(74) Mandataire: Ermeneux, Bertrand
(86) Numéro de dépôt international: PCT/FR2014/051856
(87) Numéro de publication internationale: WO 2015/028732

(56) Documents cités:
- FR-A1- 2 170 847
- JP-A- H1 169 522
- JP-A- S5 671 228
- NL-A- 8 600 195

## Description

### 1. Domaine de l'invention

Le domaine de l'invention est celui des postes électriques et des disjoncteurs à haute tension remplis d'un gaz isolant sous pression.

Plus précisément, l'invention concerne un dispositif de confinement des fuites de gaz rencontrées au niveau d'un organe de rupture d'un compartiment sous enveloppe métallique d'un poste électrique à isolation gazeuse ou d'un disjoncteur à haute tension à isolation gazeuse.

L'invention s'applique notamment mais non exclusivement aux postes électriques de type blindés à cuve métallique ou en polymère, aussi appelés G.I.S. (acronyme de "Gas Insulation Switchgear" en anglais), utilisant généralement de l'hexafluorure de soufre (SF6) comme gaz isolant.

L'invention trouve également une application pour des disjoncteurs à haute tension à gaz isolant.

### 2. Etat de la technique

On utilise généralement du SF6 pur, ou éventuellement mélangé avec du diazote, dans les postes blindés ou les disjoncteurs à haute tension, notamment pour sa rigidité diélectrique élevée et pour sa stabilité en présence d'un arc électrique.

Le SF6 présente cependant l'inconvénient d'être un gaz qui contribue fortement à l'effet de serre. C'est pourquoi, on cherche à limiter les fuites de ce gaz dans l'atmosphère.

Au niveau des postes blindés et des disjoncteurs à haute tension, on constate des fuites fugitives de SF6 notamment au niveau des brides permettant de maintenir le disque ou la membrane de rupture, qui s'amplifient avec le temps du fait du vieillissement des joints.

De ces fuites résulte une baisse de la pression interne du compartiment ou du disjoncteur, qui si elle atteint un seuil minimal de pression entraine une mise en sécurité du compartiment ou du disjoncteur.

Dans les postes blindés, la mise en sécurité d'un compartiment déclenchée par le système de surveillance de pression provoque une coupure du réseau, ce qui est très pénalisant pour l'exploitation du poste blindé.

C'est pourquoi actuellement des opérations de maintenance sont réalisées régulièrement sur les compartiments des postes blindés, afin de surveiller et de compenser les éventuelles baisses de pression ou de réduire les fuites, dans le but d'éviter un risque de coupure électrique. Ces opérations de maintenance permanente représentent à la fin de l'année une dépense importante pour l'exploitant du poste blindé.

Pour tenter de remédier au problème d'étanchéité des compartiments de postes blindés ou des disjoncteurs haute tension, on a proposé de colmater les points d'amorce de fuite avec de la pate d'étanchéité ou des résines.

Un inconvénient de cette technique de colmatage est que la pate ou la résine doit être appliquée régulièrement et avec précision autour des brides ce qui est d'autant plus complexe, long et fastidieux que le contour des brides peut être au moins en partie peu accessible.

Un autre inconvénient de cette technique connue est que l'application doit être renouvelée régulièrement.

Enfin, l'opération de colmatage sur un compartiment de poste blindé peut présenter un risque pour les personnels qui interviennent sur le poste blindé du fait des phénomènes d'induction.

Il est par ailleurs connu du document NL-A-8 600 195 de mettre en oeuvre une chambre étanche montée autour d'un disque de rupture d'une installation électrique de puissance pour contenir des fuites de gaz au niveau du disque de rupture.

### 1. Objectifs de l'invention

L'invention a donc notamment pour objectif de pallier les inconvénients de l'état de la technique cités ci-dessus.

Plus précisément l'invention a pour objectif de fournir une technique permettant de confiner des fuites de gaz apparaissant au niveau d'un disque ou d'une membrane de rupture d'un poste électrique ou d'un disjoncteur à haute tension à isolation gazeuse.

Dans au moins un mode de réalisation particulier de l'invention, un objectif est en outre de fournir une technique qui permette de récupérer le gaz fuyant au niveau du disque ou de la membrane de rupture.

Un objectif de l'invention est également de fournir une technique qui permette de protéger le disque ou la membrane de rupture des intempéries, des ultra-violets et de la corrosion.

Dans des modes de réalisation particuliers, un objectif de l'invention est également de protéger des raccords, des interfaces et/ou des organes se trouvant à proximité du disque ou de la membrane des intempéries, des ultra-violets et de la corrosion.

Un autre objectif de l'invention est de fournir une technique qui soit simple à mettre en oeuvre et qui ne nécessite pas de démonter les brides de maintien du disque ou la membrane de rupture ou des brides de montage du compartiment d'un poste blindé ou d'un disjoncteur à haute tension à isolation gazeuse.

Un objectif de l'invention est également de proposer une technique qui soit d'un coût de revient réduit.

Encore un objectif de l'invention est de fournir une telle technique qui soit fiable, et sans danger pour des opérateurs intervenant sur ou à proximité du poste blindé ou du disjoncteur à haute tension.

### 4. Exposé de l'invention

Ces objectifs, ainsi que d'autres qui apparaitront par la suite sont atteints à l'aide d'un dispositif de confinement de fuites de gaz se produisant au niveau d'un organe de rupture, telle qu'un disque ou une membrane, d'un compartiment d'un poste électrique à isolation gazeuse ou d'un disjoncteur à haute tension à isolation gazeuse.

Dans le cadre de l'invention, on entend le terme "compartiment" dans son acception usuelle, à savoir un bloc modulaire du poste électrique à isolation gazeuse.

Selon l'invention, un tel dispositif de confinement comprend une enceinte étanche agencée de sorte à pouvoir envelopper entièrement la surface extérieure dudit organe de rupture, ou en d'autres termes la surface de l'organe de rupture en contact avec l'air extérieur, ladite enceinte présentant une portion de fermeture étanche destinée à être solidarisée autour d'un élément sensiblement tubulaire dudit compartiment et comprenant des moyens de rupture sous pression apte à se rompre sous une pression de gaz inférieure à la pression de rupture dudit organe de rupture.

Ainsi, de façon inédite et astucieuse, l'invention propose d'équiper un compartiment d'un poste électrique à isolation gazeuse ou d'un disjoncteur à haute tension à isolation gazeuse d'un dispositif étanche permettant de confiner l'ensemble des fuites de gaz se produisant au niveau du disque ou de la membrane de rupture, sans affecter la sécurité du compartiment du poste électrique ou du disjoncteur.

Le dispositif de confinement selon l'invention permet par ailleurs de protéger l'organe de rupture contre les intempéries et les rayonnements du soleil.

En outre, il convient de noter que le dispositif de confinement selon l'invention est avantageusement prévu pour pouvoir être installé sans démonter l'organe de rupture et/ou des brides du compartiment ou du disjoncteur.

Selon un mode de réalisation particulier de l'invention, lesdits moyens de rupture comprennent un disque ou une membrane métallique.

Dans une variante de ce mode de réalisation, il peut être envisagé que le disque ou la membrane de rupture soit en matière plastique.

Dans un mode de réalisation particulier de l'invention, lesdits moyens de rupture sont formés d'une portion d'épaisseur mince de ladite enceinte.

En d'autres termes, les moyens de rupture peuvent être constitués d'une portion de la paroi de l'enceinte plus mince et donc moins résistante à la pression.

Selon un mode de réalisation avantageux de l'invention, lesdits moyens de rupture sous pression sont configurés pour se rompre sous une pression inférieure à la pression de rupture de l'organe de rupture d'au moins 15%, et de préférence d'au moins 20%, et au moins inférieure de 0,5 bar par rapport à la pression de rupture de l'organe de rupture.

Ainsi, les moyens de rupture vont céder suffisamment vite pour empêcher la pression de monter au sein du compartiment ou du disjoncteur.

Dans au moins un mode de réalisation particulier de l'invention, lesdits moyens de rupture sous pression sont dimensionnés pour se rompre sous une pression inférieure de 1 à 3 bars par rapport à la pression de rupture de l'organe de rupture.

De façon préférentielle, le dispositif de confinement tel que décrit ci-dessus comprend un élément de capotage monté sur la surface extérieure de ladite enceinte en vis-à-vis desdits moyens de rupture sous pression destiné à éviter des projections de fragments desdits moyens de rupture dans une direction perpendiculaire au plan dudit élément de capotage.

On protège ainsi les opérateurs évoluant à proximité du compartiment d'un risque de blessure due à des projections de fragments des moyens de rupture.

Selon un aspect avantageux de l'invention, ladite enceinte est formée de deux demi-coques s'assemblant par boulonnage.

On facilite ainsi le montage du dispositif de confinement sur le compartiment du poste blindé ou sur le disjoncteur à haute tension

Dans un mode de réalisation particulier de l'invention, ladite enceinte est en polyéthylène haute densité.

On dispose ainsi d'une enceinte légère, peu couteuse et recyclable.

Dans des variantes, ladite enceinte peut être en toute autre matière thermoplastique convenable, en élastomère, en matériau composite à base de fibres ou en tissu de fibre enduit de PEHD, de latex ou de résine, tel que du tissu de kevlar(marque déposée) enduit.

De préférence, un dispositif de confinement tel que décrit ci-dessus comprend des moyens de remplissage en gaz et/ou de dégazage et/ou de vidange de ladite enceinte.

On peut ainsi faire un apport de gaz, ou récupérer le gaz qui s'est échappé de l'organe de rupture, sans démonter l'enceinte.

Selon un mode de réalisation particulier de l'invention, ladite enceinte présente au moins un passage de câble étanche traversant la paroi de ladite enceinte, de sorte à permettre le branchement d'un capteur de mesure.

Ce passage de câble peut notamment permettre de connecter un photo-capteur ou un manomètre d'un module de service d'un compartiment de poste blindé.

Selon un aspect particulier de l'invention, un dispositif de confinement tel que décrit ci-dessus comprend un collier de serrage permettant d'appliquer ladite portion de fermeture contre ledit élément tubulaire.

L'invention concerne également un procédé d'étanchéité d'un dispositif de confinement de fuites de gaz se produisant au niveau d'un organe de rupture, telle qu'un disque ou une membrane, d'un compartiment d'un poste électrique à isolation gazeuse ou d'un disjoncteur à haute tension à isolation gazeuse tel que décrit ci-dessus, comprenant une enceinte étanche agencée de sorte à pouvoir envelopper entièrement la surface extérieure dudit organe de rupture, ladite enceinte présentant une portion de fermeture étanche destinée à être solidarisée autour d'un élément tubulaire dudit compartiment et comprenant des moyens de rupture sous pression apte à se rompre sous une pression de gaz inférieure à la pression de rupture dudit organe de rupture.

Selon l'invention un tel procédé d'étanchéité comprend une étape d'application d'une pate ou d'une bande d'étanchéité entre ladite portion de fermeture et ledit élément sensiblement tubulaire.

On réalise ainsi une étanchéité convenable quel que soit l'état de surface de l'élément sensiblement tubulaire.

Dans une variante, il peut être envisagé de mettre en oeuvre un joint torique pour réaliser l'étanchéité entre la portion de fermeture et l'élément sensiblement tubulaire.

### 5. Liste des figures

D'autres caractéristiques et avantages de l'invention apparaitront plus clairement à la lecture de la description suivante d'un mode de réalisation de l'invention, donné à titre de simple exemple illustratif et non limitatif, et des dessins annexés parmi lesquels :
- la figure 1 illustre un exemple de mode de réalisation d'un dispositif de confinement selon l'invention monté autour d'un module service d'un compartiment de poste blindé ;
- la figure 2 est une vue de détail du module de service représenté seul ;
- la figure 3 est une vue en coupe de la zone de solidarisation du dispositif de confinement avec le module de service ;
- la figure 4 représente le dispositif de confinement présenté en référence à la figure 1, en vue de dessus ;
- la figure 5 est une vue de côté d'une demi-coque formant l'enceinte étanche du dispositif de confinement présenté en référence à la figure 1.

### 6. Description détaillée de l'invention

### 6.1. Exemple de mode de réalisation de l'invention

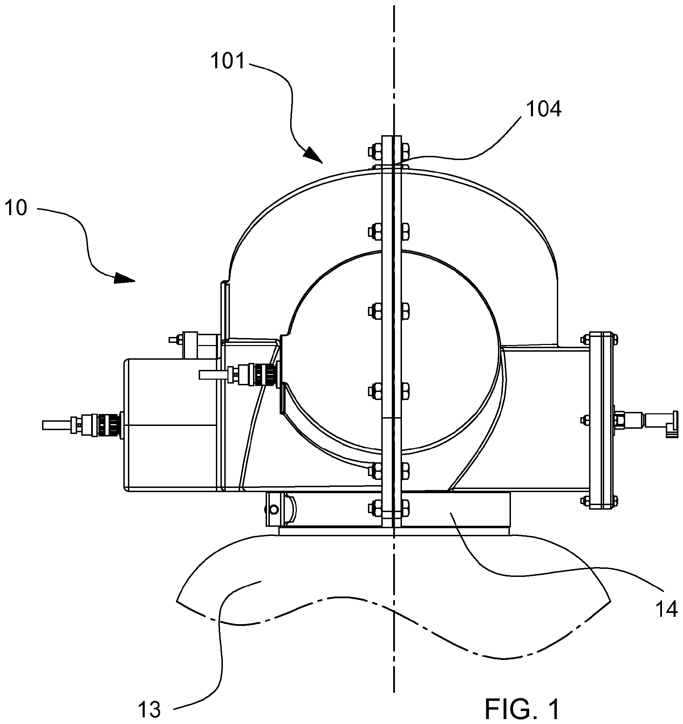

On a illustré sur la figure 1 un exemple de mode de réalisation d'un dispositif de confinement 10 selon l'invention monté autour d'un module de service connu en soi, fixé par une bride 12 à la cuve 13 d'un compartiment d'un poste blindé de 225kV.

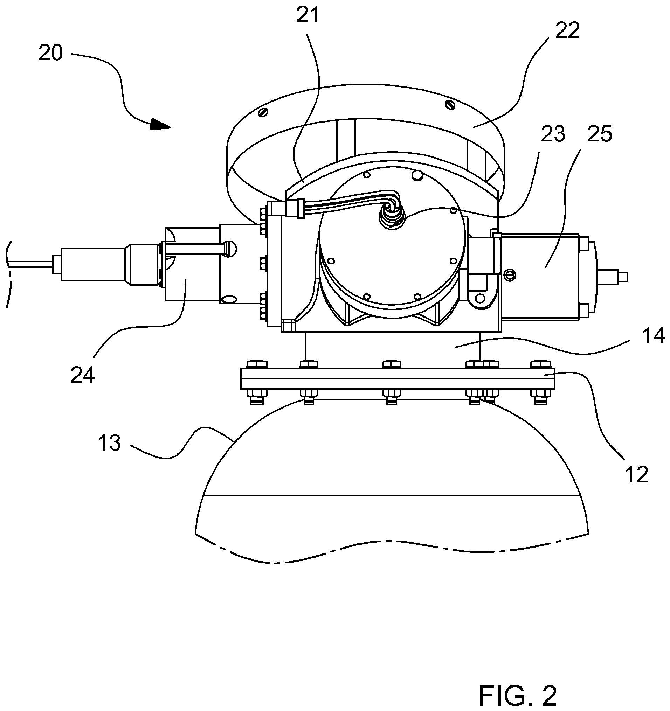

Comme on peut le voir sur la figure 2, qui représente le module de service 20 seul, celui-ci est une pièce de fonderie équipée d'un disque de rupture 21 (représenté en trait pointillés sur cette figure) surmonté d'un capot 22, encore appelé déflecteur, d'un manostat 23 permettant de mesure la pression à l'intérieur de la cuve, d'un photo-capteur 24 et d'une vanne de remplissage 25.

Dans ce mode de réalisation particulier de l'invention, le disque de rupture 21 est dimensionné pour se rompre sous une pression absolue de 9 bars.

Le dispositif de confinement 10 comprend une enceinte étanche 101 en polyéthylène haute densité au noir de carbone de type PE 100, qui enveloppe entièrement la surface extérieure du module de service 20. Ainsi, en cas de fuite(s) de gaz au niveau d'un ou plusieurs organe du module de service, celles-ci vont avantageusement être contenues à l'intérieur de l'enceinte étanche 101.

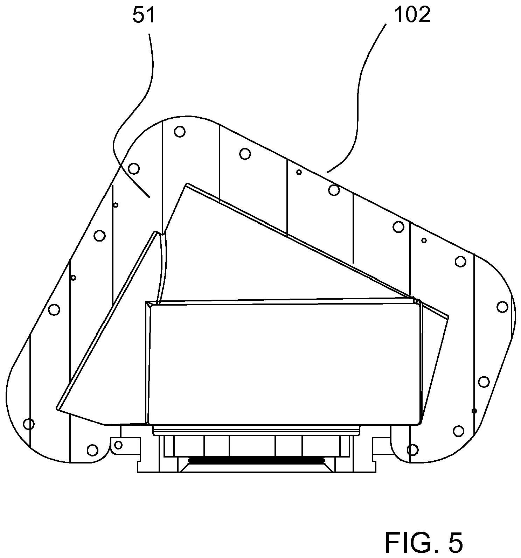

L'enceinte 101 est formée de deux demi-coques 102 et 103 assemblées par boulonnage au niveau d'un plan de joint 104. Un joint plat 51 en EPDM (acronyme d'éthylène-propylène-diène monomère) est prévu au niveau du plan de joint 104 pour assurer l'étanchéité entre les deux demi-coques 102 et 103 (voir la figure 5, qui est une vue de coté de la demi-coque 102 détachée de la demi-coque 103).

Dans une variante de ce mode de réalisation particulier de l'invention, il peut être envisagé que le joint plat 51 soit en caoutchouc ou en toute autre matière convenable connue.

L'enceinte 101 présente une portion de fermeture étanche 105 solidarisée autour de la base tubulaire 14 du module de service (20), qui est appliquée par serrage contre la base tubulaire à l'aide d'un collier de serrage 105 en inox.

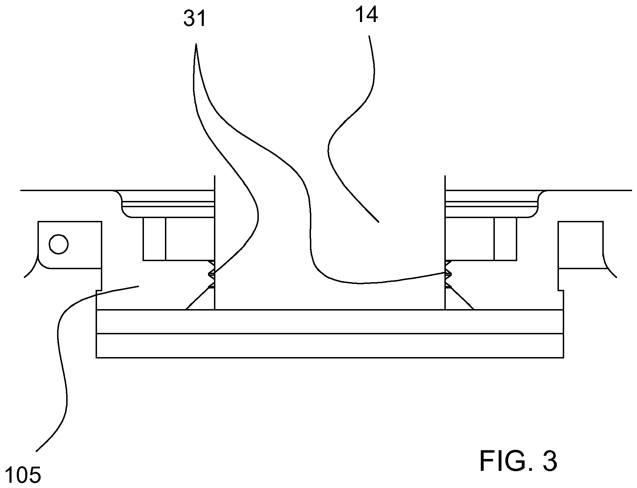

On a représenté sur la figure 3 une vue en coupe de la zone de solidarisation entre la portion de fermeture et la base tubulaire 14. Afin d'assurer une étanchéité convenable entre la surface externe de l'élément tubulaire 14 et la face interne de la portion de fermeture étanche, on a appliqué une bande d'étanchéité 31 sur l'ensemble du contour interne de la portion de fermeture étanche 105 avant de mettre en place cette dernière autour de la base tubulaire 14.

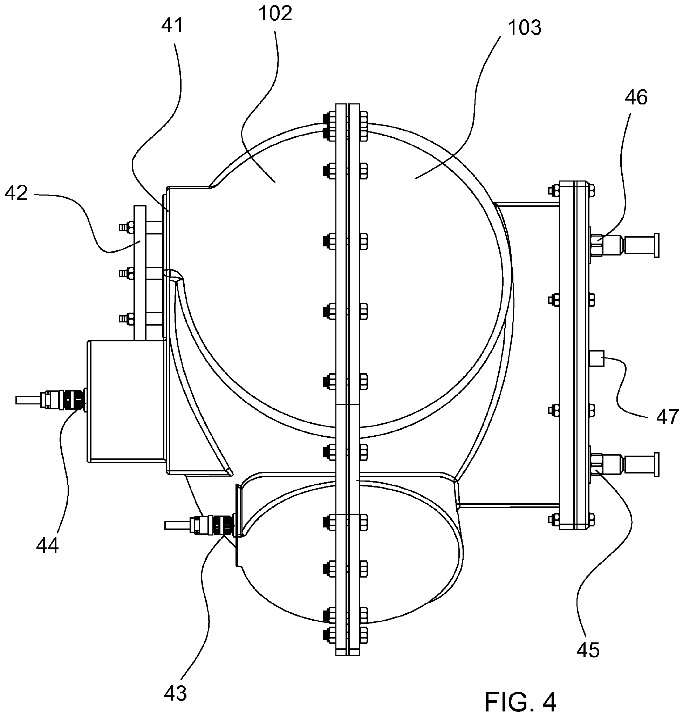

La figure 4 est en vue de dessus du dispositif de confinement 4. On peut voir sur cette figure 4 qu'un disque de rupture 41 en aluminium, dimensionné pour se rompre sous une pression de rupture de 8 bars en pression absolue, est monté sur la demi-coque 102 au niveau d'un orifice prévu dans cette demi-coque.

Le disque 41 est surmonté d'un capot métallique de protection 42 fixé sur la surface extérieure de la demi-coque 102 en vis-à-vis du disque de rupture 41, destiné à dévier des projections de fragments du disque de rupture 41 de la direction perpendiculaire au plan du capot 42.

En cas de rupture du disque de rupture 21 sous l'action d'une surpression du à un incident électrique, le gaz contenu dans la cuve du compartiment va envahir subitement l'intérieur de l'enceinte 101 et entrainer une rupture du disque de rupture 41, ce qui évite tout risque d'endommagement du compartiment.

Des traversées de cloison 43, 44 sont en outre serties sur la demi-coque 102. Elles enserrent des passages de câbles étanches permettant un branchement respectivement du manostat 23 et du photo-capteur 24.

Un raccord de remplissage de gaz 45, de type raccord rapide, et un raccord de vidange 46, permettant un dégazage de l'enceinte, sont par ailleurs prévus sur le côté de la demi-coque (103). Le raccord de remplissage 45 est relié à la vanne de remplissage du module de service par un flexible.

On a également monté un témoin lumineux de charge 47 au travers de la demi-coque 103, destiné à avertir un opérateur lorsque la pression de gaz à l'intérieur de l'enceinte étanche 101 atteint 4,5 bars en pression absolue.

### 6.2. Autres caractéristiques optionnelles et avantages de l'invention

Dans des variantes du mode de réalisation de l'invention détaillé ci-dessus, il peut également être prévu :
- de monter une membrane de rupture sur l'enceinte étanche ;
- de réduire l'épaisseur de l'enceinte sur une portion de celle-ci, de sorte qu'elle puisse se rompre en cas de surpression ;
- d'assurer l'étanchéité entre la portion de fermeture et l'élément sensiblement tubulaire à l'aide d'un joint torique ou d'une pate d'étanchéité ;
- que le disque, la membrane ou la portion mince de l'enceinte soit configuré pour se rompre sous une pression inférieure de 15%, 20%, 25%, 30%, 35 ou 40% par rapport à la pression de rupture du disque de rupture et dans tous les cas inférieure d'au moins 0,3 bar, et de préférence inférieure d'au moins 0,5 bar, à la pression de rupture du disque de rupture du module de service.

Dans une autre variante, il peut être envisagé, sans sortir du cadre de l'invention de monter un dispositif de confinement selon l'invention autour d'un simple disque de rupture.

Il peut également être prévu de monter un dispositif de confinement équipé de moyens de dégazage manuels ou automatisés tel que présenté ci-dessus autour d'une bride ou de toute pièce ou organe d'un poste électrique de type blindé susceptible de fuir, pour permettre une récupération du gaz isolant fuyant au travers de cette pièce ou de cet organe.

Le dispositif de confinement selon l'invention peut être utilisé pour tout type d'installation sous pression équipée d'un organe de rupture, et par exemple dans le domaine gazier.

## Revendications

1. Dispositif de confinement (10) de fuites de gaz se produisant au niveau d'un organe de rupture, telle qu'un disque (21) ou une membrane, d'un compartiment d'un poste électrique à isolation gazeuse ou d'un disjoncteur à haute tension à isolation gazeuse, comprenant une enceinte étanche (101) agencée de sorte à pouvoir envelopper entièrement la surface extérieure dudit organe de rupture, ladite enceinte (101) présentant une portion de fermeture étanche (105) destinée à être solidarisée autour d'un élément sensiblement tubulaire (14) dudit compartiment, **caractérisé en ce qu'**il comprend des moyens de rupture sous pression apte à se rompre sous une pression de gaz inférieure à la pression de rupture dudit organe de rupture.

2. Dispositif de confinement selon la revendication 1, **caractérisé en ce que** lesdits moyens de rupture comprennent un disque (41) ou une membrane métallique.

3. Dispositif de confinement selon la revendication 1, **caractérisé en ce que** lesdits moyens de rupture sont formés d'une portion d'épaisseur mince de ladite enceinte.

4. Dispositif de confinement selon l'une quelconque des revendications 1 à 3, **caractérisé en ce que** lesdits moyens de rupture sont configurés pour se rompre sous une pression inférieure à la pression de rupture de l'organe de rupture d'au moins 15%, et de préférence d'au moins 20%, et au moins inférieure de 0,5 bar par rapport à la pression de rupture de l'organe de rupture.

5. Dispositif de confinement selon l'une quelconque des revendications 1 à 4, **caractérisé en ce qu'**il comprend un élément de capotage (42) monté sur la surface extérieure de ladite enceinte (101) en vis-à-vis desdits moyens de rupture sous pression destiné à éviter des projections de fragments desdits moyens de rupture dans une direction perpendiculaire au plan dudit élément de capotage.

6. Dispositif de confinement selon l'une quelconque des revendications 1 à 5, **caractérisé en ce que** ladite enceinte (101) est formée de deux demi-coques (102;103) s'assemblant par boulonnage.

7. Dispositif de confinement selon l'une quelconque des revendications 1 à 6, **caractérisé en ce que** ladite enceinte (101) est en polyéthylène haute densité.

8. Dispositif de confinement selon l'une quelconque des revendications 1 à 7, **caractérisé en ce qu'**il comprend des moyens de remplissage en gaz et/ou de dégazage de ladite enceinte (101).

9. Dispositif de confinement selon l'une quelconque des revendications 1 à 8, **caractérisé en ce que** ladite enceinte (101) présente au moins un passage de câble étanche (43;44) traversant la paroi de ladite enceinte, de sorte à permettre le branchement d'un capteur de mesure.

10. Dispositif de confinement selon l'une quelconque des revendications 1 à 9, **caractérisé en ce qu'**il comprend un collier de serrage permettant d'appliquer ladite portion de fermeture (105) contre ledit élément tubulaire (14).

11. Procédé d'étanchéité d'un dispositif de confinement (10) de fuites de gaz se produisant au niveau d'un organe de rupture, telle qu'un disque (41) ou une membrane, d'un compartiment d'un poste électrique à isolation gazeuse ou d'un disjoncteur à haute tension à isolation gazeuse selon l'une quelconque des revendications 1 à 10, comprenant une enceinte étanche (101) agencée de sorte à pouvoir envelopper entièrement la surface extérieure dudit organe de rupture, ladite enceinte (101) présentant une portion de fermeture étanche (105) destinée à être solidarisée autour d'un élément sensiblement tubulaire (14) dudit compartiment et comprenant des moyens de rupture sous pression apte à se rompre sous une pression de gaz inférieure à la pression de rupture dudit organe de rupture, **caractérisé en ce qu'**il comprend une étape d'application d'une pate ou d'une bande d'étanchéité (31) entre ladite portion de fermeture et ledit élément sensiblement tubulaire.

## Patentansprüche

1. Einschlussvorrichtung (10) für Gaslecks, die im Bereich eines Berstelements, wie einer Scheibe (21) oder einer Membran, einer Kammer einer gasisolierten Hochspannungsschaltanlage oder eines Leistungsschalters mit Gasisolation auftreten, die einen dichten Einschluss (101) umfasst, der derart eingerichtet ist, dass er die Außenfläche des Berstelements vollständig umhüllen kann, wobei der Einschluss (101) einen Abschnitt zum dichten Verschließen (105) aufweist, der dazu bestimmt ist, fest um ein im Wesentlichen röhrenförmiges Element (14) der Kammer verbunden zu sein, **dadurch gekennzeichnet, dass** sie Berstmittel unter Druck umfasst, die geeignet sind, um unter einem Gasdruck, der geringer ist als der Berstdruck des Berstelements, zu bersten.

2. Einschlussvorrichtung nach Anspruch 1, **dadurch gekennzeichnet, dass** die Berstmittel eine Scheibe (41) oder eine Metallmembran umfassen.

3. Einschlussvorrichtung nach Anspruch 1, **dadurch gekennzeichnet, dass** die Berstmittel aus einem Abschnitt des Einschlusses mit dünner Stärke gebildet sind.

4. Einschlussvorrichtung nach einem der Ansprüche 1 bis 3, **dadurch gekennzeichnet, dass** die Berstmittel derart ausgebildet sind, dass sie unter einem Druck bersten, der mindestens 15 % geringer als der Berstdruck des Berstelements ist, bevorzugt mindestens 20 %, und mindestens 0,5 bar geringer als der Berstdruck des Berstelements ist.

5. Einschlussvorrichtung nach einem der Ansprüche 1 bis 4, **dadurch gekennzeichnet, dass** sie ein Verkleidungselement (42) umfasst, das auf der Außenfläche des Einschlusses (101) gegenüber den Berstmitteln unter Druck installiert und dazu bestimmt ist, das Herausschleudern von Fragmenten der Berstmittel in senkrechter Richtung zu der Ebene des Verkleidungselements zu verhindern.

6. Einschlussvorrichtung nach einem der Ansprüche 1 bis 5, **dadurch gekennzeichnet, dass** der Einschluss (101) aus zwei Halbschalen (102, 103) gebildet ist, die durch Verschraubung zusammengefügt sind.

7. Einschlussvorrichtung nach einem der Ansprüche 1 bis 6, **dadurch gekennzeichnet, dass** der Einschluss (101) aus hochdichtem Polyethylen besteht.

8. Einschlussvorrichtung nach einem der Ansprüche 1 bis 7, **dadurch gekennzeichnet, dass** sie Mittel zum Füllen mit Gas und/oder zum Entgasen des Einschlusses (101) umfasst.

9. Einschlussvorrichtung nach einem der Ansprüche 1 bis 8, **dadurch gekennzeichnet, dass** der Einschluss (101) mindestens einen gasdichten Kabeldurchlass (43; 44) aufweist, der die Wand des Einschlusses (101) derart durchquert, dass ein Messsensor angeschlossen werden kann.

10. Einschlussvorrichtung nach einem der Ansprüche 1 bis 9, **dadurch gekennzeichnet, dass** sie eine Spannschelle umfasst, die es ermöglicht, den Verschlussabschnitt (105) an dem röhrenförmigen Element (14) anzudrücken.

11. Verfahren zur Abdichtung einer Einschlussvorrichtung (10) für Gaslecks, die im Bereich eines Berstelements, wie einer Scheibe (41) oder einer Membran, einer Kammer einer gasisolierten Hochspannungsschaltanlage oder eines Leistungsschalters mit Gasisolation auftreten, nach einem der Ansprüche 1 bis 10, das einen dichten Einschluss (101) umfasst, der derart eingerichtet ist, dass er die Außenfläche des Berstelements vollständig umhüllen kann, wobei der Einschluss (101) einen dichten Verschlussabschnitt (105) aufweist, der dazu bestimmt ist, fest um ein im Wesentlichen röhrenförmiges Element (14) dieser Kammer angebracht zu sein, und Berstmittel unter Druck, die unter einem Gasdruck, der geringer ist als der Berstdruck des Berstelements, bersten können, umfasst, **dadurch gekennzeichnet, dass** es einen Schritt des Auftragens einer Dichtpaste oder eines Dichtbands (31) zwischen dem Verschlussabschnitt und dem im Wesentlichen röhrenförmigen Element umfasst.

## Claims

1. A device (10) for containing gas leaks occurring by a rupture member, such as a disk (21) or a membrane, a compartment of a gas insulated electric substation or a high-voltage gas insulated circuit-breaker, comprising a sealed enclosure (101) arranged so as to be able to completely enclose the outer surface of said rupture member, said enclosure (101) having a sealed closing portion (105) intended to be secured around a substantially tubular element (14) of said compartment, **characterised in that** it comprises means for rupturing under pressure that are capable of breaking under a gas pressure lower than the rupture pressure of said rupture member.

2. The containment device according to claim 1, **characterised in that** said rupturing means comprise a disk (41) or a metal membrane.

3. The containment device according to claim 1, **characterised in that** said rupturing means consist of a thin portion of said enclosure.

4. The containment device according to any of the claims 1 to 3, **characterised in that** said rupturing means are configured to break under a pressure lower than the rupture pressure of the rupturing member by at least 15%, and preferably at least 20% and at least lower than 0.5 bar with respect to the rupturing pressure of the rupture member.

5. The containment device according to any of the claims 1 to 4, **characterised in that** it comprises a housing element (42) mounted on the outer surface of said enclosure (101) facing said pressure rupturing means for preventing projections of fragments of said rupturing means in a direction perpendicular to the plane of said housing member.

6. The containment device according to any of the claims 1 to 5, **characterised in that** said enclosure (101) consists of two half-shells (102; 103) which can be bolted together.

7. The containment device according to any of the claims 1 to 6, **characterised in that** said enclosure (101) is made of high-density polyethylene.

8. The containment device according to any of the claims 1 to 7, **characterised in that** it comprises means for filling said enclosure (101) with gas and/or degassing said enclosure.

9. The containment device according to any of the claims 1 to 8, **characterised in that** said enclosure (101) has at least one sealed grommet (43; 44) running through the wall of said enclosure so as to allow the connection of a measuring sensor.

10. The containment device according to any of the claims 1 to 9, **characterised in that** it comprises a clamp for applying said closing portion (105) against said tubular element (14).

11. The method for sealing a device (10) for confining gas leaks occurring by a rupture member, such as a disk (21) or a membrane, a compartment of a gas insulated electric substation or a high-voltage gas insulated circuit-breaker according any of claims 1 to 10, comprising a sealed enclosure (101) arranged so as to be able to completely enclose the outer surface of said rupture member, said enclosure (101) having a sealed closing portion (105) intended to be secured around a substantially tubular element (14) of said compartment and comprising means for rupturing under pressure that are capable of breaking under a gas pressure lower than the rupture pressure of said rupture member, **characterised in that** it comprises a step of applying a paste or a sealing strip (31) between said closing portion and said substantially tubular element.
